# EUROPEAN PATENT APPLICATION

(11) **EP 1 466 719 A1**
(43) Date of publication of application: **13.10.2004**
(21) Application number: 04380067.1
(22) Date of filing: 26.03.2004
(51) Int. Cl.: B29D 31/515, A43B 13/24

(54) **Attachment procedure of fittings to footwear soles and fittings used with this procedure**

(30) Priority: 11.04.2003 ES 200300872 U
(71) Applicant: Ortuno Santa, Pedro, 30510 Yecla (ES)
(72) Inventor: Ortuno Santa, Pedro, 30510 Yecla (ES)
(74) Representative: Maldonado Jordan, Julia

(57) **Abstract**

The procedure consists in the use of a mould (1) for obtaining said sole by means of injection moulding or vulcanization, in which a recess or imprint (2) is established, that complies, as regards shape and dimensions with the sole to be obtained, equipped, for example on the areas corresponding to the toe and the heel, with ribs (7) intended to configure, receiving channels of respective embellishing fittings on the sole, but with the special particularity that on said ribs (7) protrusions emerge, at strategic locations for attachment of the fittings, based on a short cylindrical neck (8) finished off with one expanded and rounded head (9) that is going to originate, on the sole, strangled mouth housings, in such a manner, that providing the embellishing fittings with protrusions that coincide as regards shape, position and dimensions with the (8-9) of the mould, said fittings are capable of being male-female coupled to the sole, under pressure, keeping them perfectly stable in assembly situation, though allowing their disassembly in order to be replaced.

## Description

### OBJECT OF THE INVENTION

The present invention refers to a new procedure for the attachment of certain embellishing fittings used on footwear soles, specifically on soles obtained on the basis of elastomeric or similar materials, during injection or vulcanization processes.

The object of the invention is to obtain, in addition to a perfect attachment of the fittings to the sole, a total physical independence between said elements that makes possible the replacement of the embellishing fittings on one same sole at any moment.

This procedure requires a special structuring for these fittings, which is also an object of the invention.

### BACKGROUND OF THE INVENTION

In a determined type of footwear, there is a general practice to integrate fittings on the soles, generally placed on their side wall and/or on their bottom base, which act as embellishers that contrast with the elastomeric material constituting the sole, due, both to its own nature and to its design.

An original solution for the attachment of these fittings consisted in providing them with orifices for screwing them to the actual sole, with the collaboration of tap bolts, said solution being slow to operate and leaving the screw heads visible, which decisively determines the aesthetic appearance of the embellishing fitting.

Said attachment process is accelerated by substituting the screws or tap bolts by rivets, which is another technique that is also used but which however, maintains the design limitations entailed by said rivet heads on the embellisher as a whole.

A more sophisticated solution is the one described by Spanish Patent of Invention P200200476, the holder of which is the actual applicant, and which consists of using embellishers with dihedral configuration, simultaneously adaptable to the side surface and to the lower face of the sole and provided with wide openings through which wedges, operatively established on said sole, pass through, in such a manner, that providing the dihedral, configured by the embellisher, with an angle, slightly inferior to the one determined between the side surface and the lower face of the sole, a press fit of said embellisher is achieved, keeping it stable.

This solution, as is evident from what has been previously described, is only valid for embellishers that simultaneously affect the side wall and the lower face of the sole, which involves a considerable limitation, at the same time limiting its design due to the need of openings for the installation of wedges on the soles.

### DESCRIPTION OF THE INVENTION

.The procedure proposed by the invention solves the previously described problem in a totally satisfactory manner, making possible, in addition to a perfect attachment of the fittings to the sole, that these fittings can be removed at any moment from the sole, to be replaced by others, the same or different.

For this, and more specifically, the procedure consists in the use of moulds which, in addition to adapting to the volume and configuration of the sole, include, on areas planned for subsequent attachment of the fittings, protrusions which, after the injection or vulcanization of the elastomer, will create on the sole, strangled mouth housings, advantageously placed, as will be seen further on.

In addition, the fitting must be equipped with protrusions, that are coincident, as regards, shape, dimension and positioning, with the mould, so that during the subsequent assembly of said fitting on the sole, they can be press-fitted inside the housings of the latter, maintaining a stable attachment, though with disassembly possibilities.

Depending on their size, the fittings may have one, two or more protrusions, so as to achieve an appropriate degree of stability, and specifically in cases when two or more protrusions exist, their axes shall tend to adopt the most correct position to aid the demoulding, in such a manner, that for example, in the supposed case that a sole with fittings requiring the existence of protrusions, both on the bottom mould and on the top mould, affecting, in the latter, the side edge of the sole, the protrusion of the latter shall have an appreciably downwards and inwards inclination, and that of the lower face of the sole, upwards and also inwards, in such a way, that in the separation of the top mould, the corresponding protrusion comes out relatively easily from the internal recess of the sole, and the same happens with the lower protrusion, though this arrangement additionally allows a subsequent relatively easy assembly of the fitting, that does not require an excessive force.

Preferably, said protrusions, both those of the mould and those of the fittings, shall present a short cylindrical neck, with reduced diameter, finished off with an ellipsoidal shaped head that helps, both its coupling and its uncoupling, but that makes necessary, both for one and for the other, a momentary widening of the mouth of the elastomeric material orifice that constitutes the sole, by its elastic deformation which requires sufficient force to make impossible the accidental uncoupling of the embellisher.

### DESCRIPTION OF THE DRAWINGS

In order to complement the description that is being made, and with the object of helping towards a better understanding of the characteristics of the invention, according to a preferred practical embodiment example of the same, a set of drawings is enclosed, forming integral part of said description, in which, with illustrative and non limitative character, the following has been represented:
Figure 1 shows a top-lateral perspective view of the bottom mould that participates in the attachment procedure of fittings to footwear soles that constitutes the object of the present invention.
Figure 2 shows, also according to a perspective view, a fitting provided for putting said procedure into practice.
Figure 3 shows a sectional profile of the mould assembly, and in closed condition.
Figure 4 finally shows, a sectional detail, similar to that of the previous figure, though corresponding to the sole obtained with said mould after installing the corresponding fitting in the same.

### PREFERRED EMBODIMENT OF THE INVENTION

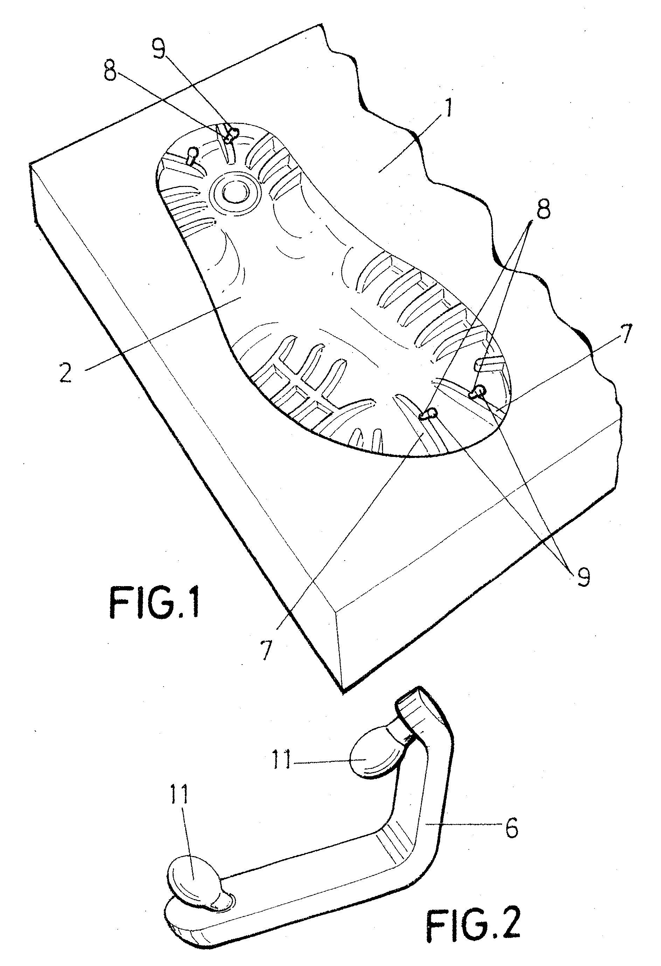

Figure 1 partially represents the bottom mould used for putting into practice the procedure of the invention, that may be simple or double, in order to obtain simultaneously, in the latter case, the right and left soles of a specific footwear, in any case, including in said bottom mould (1) depressions or imprints (2) which, complemented with another depression (3) of the top mould (4), creates a receptacle that is coincident as regards shape and dimensions, with the sole (5) to be obtained.

In the practical embodiment example of the figures it has been provided, that said sole (5) includes, both at the level of the toe and at the level of the heel, corresponding pairs of embellishing fittings (6) each one of them constructed into an elbowed arm, adaptable, both to the lower face and to the lateral face of the sole (5), to the effect, that the depression or imprint (2) of the mould (1) and in the zones, appropriate to that respect, ribs (7) must exist, that configure on the sole (5), the housing in which the respective embellishers (6) are going to be located.

In consequence, in accordance now with the invention, mould (1-4) includes, in correspondence with the end areas of said ribs (7), internal protrusions (8) constructed into a short cylindrical neck that corresponds with the actual reference (8) and which is finished off in a bulky end (9) with a preferable ellipsoidal configuration and with its larger axis coaxial with the actual neck (8), in such a manner, that these protrusions (8-9) are intended to define, on sole (5) and in correspondence with each groove that receives an embellisher (6), respective housings (10) with equal configuration, that is to say, with strangled mouth, in which the protrusions (11) of fitting (6), in turn identical in shape and dimensions to protrusions (8-9) of mould (1-4), can be pressure fitted.

Thus, housings (10) present their mouths strangled, and in order that the protrusions (11) of embellishers (6) can penetrate into them, it is necessary that an elastic deformation of the material that constitutes sole (5) is produced, this requires a notable force that ensures the immobilization of said embellishers in the normal use of the footwear, but permitting however their disassembly at any moment, for replacement.

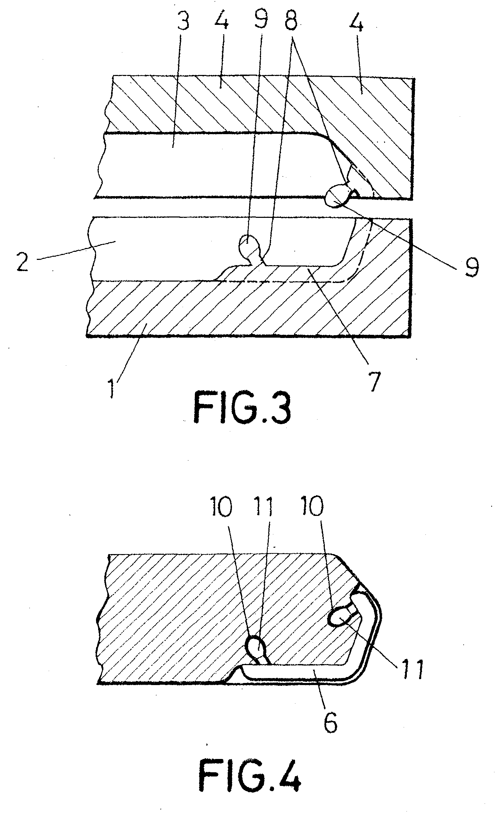

Finally, there is only need to point out that protrusions (8-9) of the bottom mould (1) placed on its bottom or imprint (2), shall adopt a vertical or almost vertical position to facilitate the demoulding of sole (5), and that protrusions (8-9) of the top mould (4) shall in turn adopt an appreciably downward sloping and inwards position, as is shown in Figure 3, with the same purpose of facilitating the demoulding, all this, additionally searching for the maximum proximity to parallelism between the protrusions of one same fitting, so that in turn, it facilitates the assembly and disassembly of the latter, to which effect, and as can also be observed in Figure 3, protrusions (8-9) of the bottom or imprint (2) of the mould (1) shall have a preferable inclination towards the middle area of the sole so that without an excessively detrimental repercussion on the demoulding, it facilitates the installation/disassembly of the corresponding embellisher (6).

## Claims

1. Attachment procedure of fittings to footwear soles, **characterized in that** it consists of the use of an injection or vulcanization mould (1-4) in which a housing (3) in closed situation is defined, and which coincides in shape and dimensions with the sole to be obtained, and in which in consequence, ribs (7) are established, appropriate as regards shape, dimensions and position to the embellishing fittings (6) that must form part of the sole, but with the special particularity that in correspondence with said ribs (7), at least one protrusion (8-9) emerges from the bottom mould (1) and/or top mould (4) which is going to cause a housing (10) with strangled mouth on the sole, for the reception of a protrusion (11) with equal configuration, existing in the complementary embellisher fitting (6).

2. Attachment procedure of fittings to footwear soles, according to Claims 1, **characterized in that** said protrusions (8-9) are configured in such a manner, that each one of them is provided with an initial neck (8), preferably cylindrical, finished off with a head or expansion (9) with preferable ellipsoidal configuration, its major axis being situated coaxially with neck (8).

3. Attachment procedure of fittings to footwear soles, according to the previous Claims, **characterized in that**, when the mould includes at least one pair of protrusions for one same fitting, said protrusions are placed both on the bottom mould (1) and on the top mould (4) in such a manner, that their axes are orientated in order to help the demoulding and in turn, in order to help the assembly and disassembly of the embellisher fitting, to which effect, the protrusions (8-9) situated on the bottom of the recess or imprint (2) of the bottom mould, (1), are appreciably inclined upwards and towards the middle area of the sole, whilst the protrusions that are situated on the top mould (4) are in turn situated with an appreciable downwards inclination and towards the middle area of the sole.

4. Fitting used with the procedure of the previous Claims, **characterized in that**, with any configuration in accordance with any line of design, it presents at least one protrusion (11) on its internal face, that of adaptation to the sole (5), defining for said protrusion, a short initial cylindrical neck, finished off with a rounded expansion, preferably with ellipsoidal configuration, with its larger axis coaxial with the actual cylindrical neck.
